(19) **Europäisches Patentamt / European Patent Office / Office européen des brevets**

(11) **EP 4 123 212 A1**

(12) # EUROPEAN PATENT APPLICATION

(43) Date of publication:
**25.01.2023 Bulletin 2023/04**

(21) Application number: **22183119.1**

(22) Date of filing: **05.07.2022**

(51) International Patent Classification (IPC):
**F17C 5/00** (2006.01)     **F17C 5/06** (2006.01)
**F17C 13/00** (2006.01)

(52) Cooperative Patent Classification (CPC):
**F17C 5/06; F17C 5/007; F17C 13/00;**
F17C 2221/012; F17C 2223/0123; F17C 2223/036;
F17C 2260/02; F17C 2265/065; F17C 2270/0168

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.07.2021   JP 2021120813**

(71) Applicant: **TOYOTA JIDOSHA KABUSHIKI KAISHA**
**Toyota-shi, Aichi-ken, 471-8571 (JP)**

(72) Inventors:
- **YAMAMOTO, Shota**
  **Toyota-shi, 471-8571 (JP)**
- **KONDO, Toshiyuki**
  **Toyota-shi, 471-8571 (JP)**

(74) Representative: **D Young & Co LLP**
**120 Holborn**
**London EC1N 2DY (GB)**

(54) **HYDROGEN FILLING RECEPTACLE**

(57)    Even when, in particular, a hydrogen tank has a large capacity, the time for filling the hydrogen tank with hydrogen can be reduced, and hydrogen filling can be efficiently performed. A hydrogen filling receptacle to which a nozzle is connected in hydrogen filling, the hydrogen filling receptacle includes: a passage for hydrogen, the passage being formed inside the hydrogen filling receptacle, the passage having a diameter D5 (mm); a depression part on part of an outer periphery of the hydrogen filling receptacle, the depression part having a diameter of D3 (mm); and a step part between a back end and the depression part, the step part having an outer diameter D2 (mm) smaller than D1 (mm) and larger than the D3 (mm) when a side of the hydrogen filling receptacle where the nozzle is to be inserted is defined as a front end, an opposite side thereof is defined as the back end, and an outer diameter of the back end is defined as the D1 (mm), wherein the D1 (mm) is larger than D4 (mm) when an outer diameter of the front end is defined as the D4 (mm), and the diameter D5 (mm) is at least 3.7 mm.

## Fig. 1

**(Cont. next page)**

Fig. 2

## Description

FIELD

The present disclosure relates to a receptacle that is connected to a nozzle in hydrogen filling.

BACKGROUND

Patent Literatures 1 and 2 each disclose a gas connection device: the gas connection device is provided with a nozzle having a gas passage for supplying gas; and a receptacle having an inserting space to which the nozzle is inserted, and a gas passage connected with the gas passage of the nozzle by the insertion of the nozzle.

CITATION LIST

Patent Literature

Patent Literature 1: JP 2014-181777 A
Patent Literature 2: JP 2009-156324 A

SUMMARY

Technical Problem

When a large-sized vehicle is a fuel cell electric vehicle, sufficient driving distance cannot be kept when the maximum filling capacity of hydrogen gas is within 30 kg, which is provided by the existing standard. However, when the filling amount of hydrogen gas increases, the time for the filling tends to be longer. For hydrogen filling in a short time, not only filling at a conventional filling speed but also filling at a faster speed (so-called large flow) is necessary.

In view of the above-described problems, an object of the present disclosure is, even when, in particular, a hydrogen tank has a large capacity, to enable the time for filling the hydrogen tank with hydrogen to be reduced, and hydrogen filling to be efficiently performed.

Solution to Problem

Based on the foregoing findings, the present application discloses a hydrogen filling receptacle to which a nozzle is connected in hydrogen filling, the hydrogen filling receptacle comprising: a passage for hydrogen, the passage being formed inside the hydrogen filling receptacle, the passage having a diameter D5 (mm); a depression part on part of an outer periphery of the hydrogen filling receptacle, the depression part having a diameter of D3 (mm); and a step part between a back end and the depression part, the step part having an outer diameter D2 (mm) smaller than D1 (mm) and larger than the D3 (mm) when a side of the hydrogen filling receptacle where the nozzle is to be inserted is defined as a front end, an opposite side thereof is defined as the back end, and an outer diameter of the back end is defined as the D1 (mm), wherein the D1 (mm) is larger than D4 (mm) when an outer diameter of the front end is defined as the D4 (mm), and the diameter D5 (mm) is at least 3.7 mm.

"Hydrogen filling receptacle" is a member arranged at an end of a hydrogen introducing pipe extending from a hydrogen tank, and to be connected to the nozzle disposed at a hydrogen supply apparatus. "Hydrogen filling receptacle" is a connecting member for forming a passage for hydrogen from the hydrogen supply apparatus to the hydrogen tank.

In the hydrogen filling receptacle, the diameter D5 (mm) of the passage may be at least 1/7 of the diameter D2 (mm) of the step part.

Advantageous Effects

According to the present disclosure, even when, in particular, the hydrogen tank has a large capacity, the connection between the hydrogen tank and the nozzle can be properly kept, the time for filling the hydrogen tank with hydrogen can be reduced, and the hydrogen tank can be efficiently filled with hydrogen.

BRIEF DESCRIPTION OF DRAWINGS

Fig. 1 is a schematic view of a hydrogen filling apparatus 1;
Fig. 2 shows an external appearance of a hydrogen filling receptacle 15;
Fig. 3 shows a cross section of the hydrogen filling receptacle 15;
Fig. 4 shows an aspect of connection between the hydrogen filling receptacle 15 and a nozzle 5;
Fig. 5 shows an aspect of connection between the hydrogen filling receptacle 15 and the nozzle 5; and
Fig. 6 shows an aspect of the hydrogen filling receptacle 15 and the nozzle 5, which are non-connectable to each other.

DESCRIPTION OF EMBODIMENTS

1. Summary of Hydrogen Filling

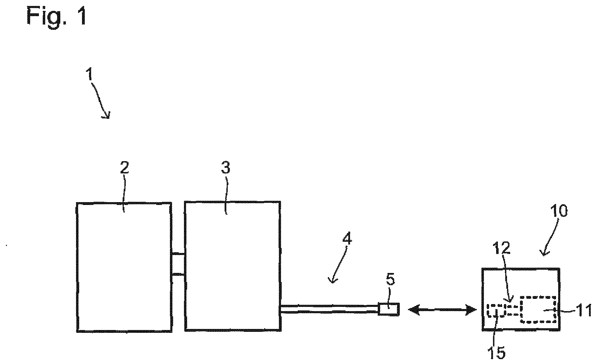

Fig. 1 explanatorily shows one exemplary illustration where a hydrogen filling receptacle 15 according to the present disclosure is used. Fig. 1 schematically shows a hydrogen filling apparatus 1, and an automobile (fuel cell electric vehicle) 10 equipped with a fuel cell to be filled with hydrogen from the hydrogen filling apparatus 1.

The hydrogen filling apparatus 1 is provided at a so-called hydrogen station. Hydrogen is supplied from the hydrogen filling apparatus 1 to a hydrogen tank 11 provided in the fuel cell electric vehicle 10.

The fuel cell electric vehicle 10 is as known. A fuel cell system is provided inside a body of the fuel cell electric vehicle 10. The fuel cell system is provided with the fuel cell and the hydrogen tank 11. Hydrogen is supplied from the hydrogen tank 11 to the fuel cell. The fuel cell generates electricity by oxidizing, with a separately supplied oxidizing gas (air), hydrogen that is supplied from the hydrogen tank 11 and is used as a fuel gas. A motor that is a driving source of the vehicle is rotated by this generated electricity. According to the present disclosure, as described above, the hydrogen tank 11 can be efficiently filled with hydrogen even when, in particular, the fuel cell electric vehicle 10 is a large-sized vehicle and the hydrogen tank 11 has a capacity more than 30 kg.

The hydrogen filling apparatus 1 is provided with an accumulator 2 in which hydrogen is sealed, a compressor 3 adapted to compress (pressurize) hydrogen released from the accumulator 2 to piping, a hydrogen supply pipe 4 adapted to supply the pressurized hydrogen from the compressor 3 to the fuel cell electric vehicle 10, and a control unit (not shown) that controls the supply of hydrogen. A nozzle 5 is disposed at an end of the hydrogen supply pipe 4.

In the fuel cell electric vehicle 10, a hydrogen introducing pipe 12 extends from the hydrogen tank 11. A connecting member to the nozzle 5, and the hydrogen filling receptacle 15 according to the present disclosure, which functions as a filling port, are disposed at an end of the hydrogen introducing pipe 12.

The connection of the nozzle 5 of the hydrogen filling apparatus 1 and the hydrogen filling receptacle 15 of the fuel cell electric vehicle 10 to each other causes a passage for hydrogen filling to be formed. Hydrogen released from the inside of the accumulator 2 by the compressor 3 passes through the route through the hydrogen supply pipe 4, the nozzle 5, the hydrogen filling receptacle 15, the hydrogen introducing pipe 12, and the hydrogen tank 11; thereby, hydrogen filling is performed.

2. Hydrogen Filling Receptacle

Concerning efficient filling of a hydrogen tank having a large capacity with hydrogen, using a conventional hydrogen filling receptacle causes the time for the hydrogen filling to be longer because it is not assumed that a hydrogen tank having a large capacity is efficiently filled with hydrogen (that hydrogen is made to efficiently flow into the hydrogen tank) using a conventional hydrogen filling receptacle. A conventional hydrogen filling receptacle cannot be connected to any existing nozzle even if just made to be larger for increasing the flow of hydrogen.

Therefore, a new form of a hydrogen filling receptacle which allows the hydrogen filling receptacle to be connected to an existing nozzle, and efficient hydrogen filling to be performed is necessary. The present disclosure is provided with the hydrogen filling receptacle for the foregoing.

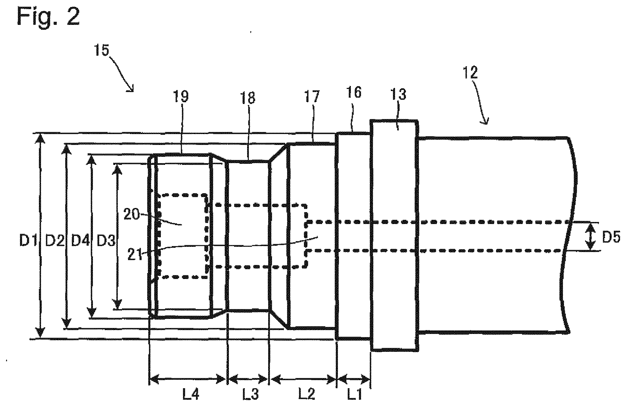

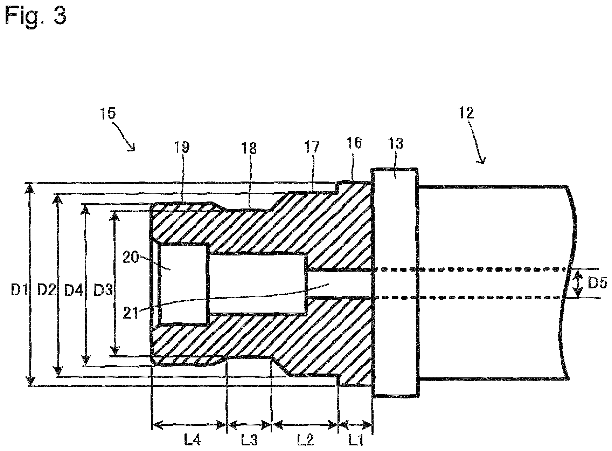

Figs. 2 and 3 show an embodiment of the hydrogen filling receptacle 15 arranged at the end of the hydrogen introducing pipe 12 according to one example of the present disclosure. Fig. 2 is an external view (a front view, or a view looking in the same direction as Fig. 1). Fig. 3 is a cross-sectional view taken in the direction along the axis of the hydrogen filling receptacle 15, which is cylindrical as a whole.

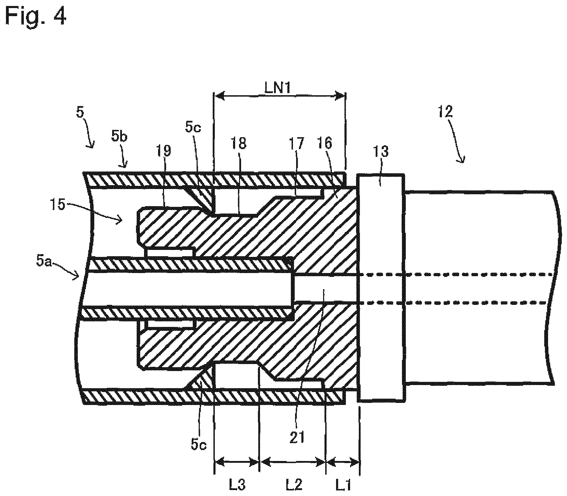

As can be seen from Figs. 2 and 3, the hydrogen filling receptacle 15 is cylindrical as a whole: a nozzle inserting part 20 to which a passage part 5a (see Figs. 4 to 6) of the nozzle 5 is to be inserted, and a passage 21 continuing from the nozzle inserting part 20, to be a passage for hydrogen, and having a diameter D5 (mm) are formed inside the hydrogen filling receptacle 15.

The outer periphery of the hydrogen filling receptacle 15 has such a shape that a fitting part 5b (see Figs. 4 to 6) of the nozzle 5 is fitted thereto. On this outer periphery, plural portions having different diameters are arranged so as to align in parallel to the direction where the axis extends. Specifically, the hydrogen filling receptacle 15 is provided with a back end part 16 having a diameter D1 (mm) and a length L1 (mm) on the hydrogen introducing pipe 12 side, a step part 17 continuing from the back end part 16 and having a diameter D2 (mm) and a length L2 (mm), a depression part 18 continuing from the step part 17 and having a diameter D3 (mm) and a length L3 (mm), and a front end part 19 forming the front end side of the hydrogen filling receptacle 15 and having a diameter D4 (mm) and a length L4 (mm). Here, a side of the hydrogen filling receptacle 15 where the nozzle 5 is to be inserted may be referred to as "front end", and the opposite side thereof (side where the hydrogen filling receptacle 15 is connected to the hydrogen introducing pipe 12) may be referred to as "back end".

A stopper member 13 that is an annular member protruding further than the outer circumference of the hydrogen filling receptacle 15 may be arranged between the back end of the hydrogen filling receptacle 15 and the end of the hydrogen introducing pipe 12. This is a member for clarifying a portion to which the nozzle is to be inserted. Even in case of further insertion of the nozzle beyond the hydrogen filling receptacle 15 because of, for example, some fault, the nozzle is in contact with the stopper member 13, and therefore further insertion thereof is restrained.

Here, the diameter D5 (mm) of the passage 21 is preferably at least 3.7 mm. This allows the cross-sectional area of the passage for hydrogen of a large flow to be surely kept, and hydrogen to be efficiently supplied to the hydrogen tank. The diameter D5 (mm) of the passage 21 is more preferably at least 1/7 of the diameter D2 (mm) of the step part 17.

The outer circumferential shape of the hydrogen filling receptacle 15 is preferably configured as follows. This allows the hydrogen filling receptacle 15 to be joined to any existing nozzle.

Preferably, the diameter D2 (mm) of the step part 17 is larger than the diameter D3 (mm) of the depression part 18, and is smaller than the diameter D1 (mm) of the back end part 16. That is, D3 (mm) < D2 (mm) < D1 (mm).

Concerning the relationship between the back end part 16 and the front end part 19 holding the depression part 18 therebetween, the diameter D1 (mm) of the back end part 16 is preferably larger than the diameter D4 (mm) of the front end part 19. That is, D4 (mm) < D1 (mm).

The diameter D3 (mm) of the depression part 18 is the smallest among the diameters D1 (mm), D2 (mm) and D4 (mm) of the other portions.

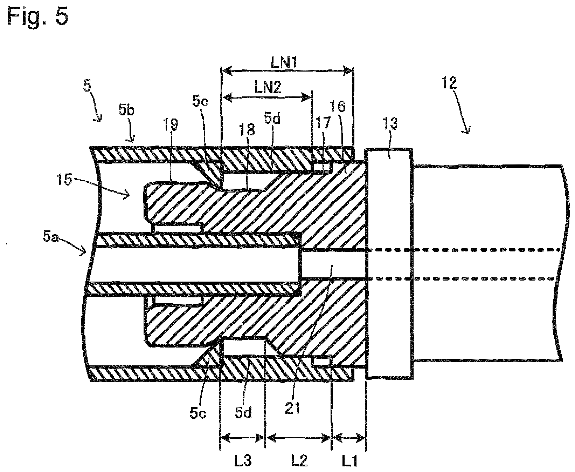

This allows the nozzle 5 to be connected to the hydrogen filling receptacle 15 as follows, for example. Figs. 4 and 5 are explanatory views. Figs. 4 and 5 show the hydrogen filling receptacle 15 shown in Fig. 3 in combination with the passage part 5a and the fitting part 5b of the nozzle 5 in the same view as Fig. 3.

The nozzle 5 is in the form of a double pipe as a whole: the passage part 5a in a tubular form is coaxially arranged inside the fitting part 5b that is a cylinder. The passage part 5a is a pipe forming a passage for hydrogen, and is to be inserted into the nozzle inserting part 20 of the hydrogen filling receptacle 15 as can be seen from Figs. 4 and 5.

The fitting part 5b is arranged in such a way that the inner wall surface thereof faces the outer periphery of the hydrogen filling receptacle 15, and to connect the nozzle 5 and the hydrogen filling receptacle 15. Specifically, the nozzle 5 is provided with an engaging claw 5c in such a way that the engaging claw 5c protrudes from the inner wall surface of the fitting part 5b. The engaging claw 5c engaging with the depression part 18 of the hydrogen filling receptacle 15 brings both the nozzle 5 and the hydrogen filling receptacle 15 to be stably connected. The engaging claw 5c can be buried in the inner wall surface of the fitting part 5b with a switching mechanism (not shown). The engaging claw 5c can be kept as its protruding state is switched to/from its buried state as necessary.

There are plural types of fitting part 5b of the existing nozzle 5 according to its inner surface profile. For example, there is such a type: only the engaging claw 5c is included as shown in Fig. 4; and there is also such a type: a projection 5d extending from the engaging claw 5c toward the end side of the nozzle 5 is provided in addition to the engaging claw 5c as shown in Fig. 5.

The hydrogen filling receptacle according to the present disclosure is fittable (connectable) to any of such plural types of existing nozzles. The form of the nozzle is not particularly limited. A nozzle having LN2 (mm) of 9.7 mm or more is preferably used when the length from the engaging claw 5c to an end of the fitting part 5b is defined as LN1 (mm), and the length of the projection 5d is defined as LN2 (mm). LN1 (mm) is more preferably at most 30.6 mm. The ratio represented by LN1/LN2 is preferably at least 0.31.

There are also several types of nozzles according to the ranges of their assumed flows of hydrogen irrespective of their inner surface profile. A hydrogen filling receptacle flexibly connectable to such plural types of nozzles is necessary for efficiently filling a hydrogen tank of a large capacity with hydrogen.

For the form of the nozzle as the foregoing, providing the step part 17 as the hydrogen filling receptacle according to the present disclosure allows the nozzle 5 and the hydrogen filling receptacle 15 to be properly connected to each other even when there is the projection 5d on the fitting part 5b of the nozzle 5.

Specifically, as the example shown in Fig. 4, the engagement claw 5c engaging with the depression part 18 brings the nozzle 5 and the hydrogen filling receptacle 15 to be stably connected when the inner surface of the fitting part 5b of the nozzle 5 only includes the engaging claw 5c but the projection 5d is not arranged thereon.

In contrast, as shown in Fig. 5, when arranged in addition to the engaging claw 5c on the inner surface of the fitting part 5b of the nozzle 5, the projection 5d is arranged so as to face the step part 17, and therefore, does not prevent the nozzle 5 and the hydrogen filling receptacle 15 from connecting to each other. Thus, the nozzle 5 and the hydrogen filling receptacle 15 are stably connected. If there is no step part 17, and the back end part 16 extends to a position adjacent to the depression part 18, the back end part 16 touches the projection 5d, and therefore, the nozzle 5 and the hydrogen filling receptacle 15 cannot be connected to each other.

As the foregoing, the hydrogen filling receptacle 15 according to the present disclosure can be flexibly connected in response to the type of nozzle, and enables options of the type of nozzle to increase. Thus, the time for hydrogen filling can be reduced, and efficient hydrogen filling can be performed.

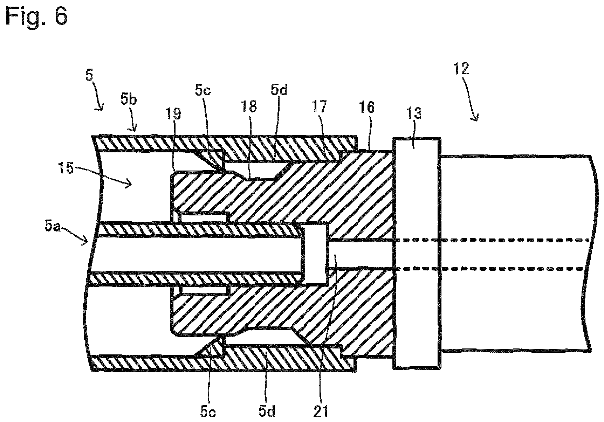

There is, however, a case where proper hydrogen filling cannot be performed due to the form of the nozzle, and the character of the hydrogen filling apparatus provided with this nozzle. For this, it is possible to adjust the lengths L1 to L3 of the hydrogen filling receptacle 15 so that the nozzle 5 and the hydrogen filling receptacle 15 cannot be physically connected in such a case. For example, as shown in Fig. 6, the projection 5d touches the back end part 16 before the engaging claw 5c reaches the depression part 18 when the nozzle 5 and the hydrogen filling receptacle 15 are connected to each other. This makes it impossible to connect the nozzle 5 and the hydrogen filling receptacle 15 to each other.

Hereinafter specific examples when the hydrogen filling receptacle 15 and the nozzle 5 are fittable, and are unfittable will be described.

When the total of L1 (mm), L2 (mm) and L3 (mm) is at least LN1 (mm), the hydrogen filling receptacle 15 is fittable to the nozzle 5 having the engaging claw 5c but no projection 5d as shown in Fig. 4. That is,

$$L1 + L2 + L3 \geq LN1$$

Therefore, for example, L1 + L2 + L3 is preferably at least 20.6 mm.

When the total of L1 (mm), L2 (mm) and L3 (mm) is less than LN1 (mm), the hydrogen filling receptacle 15 is unfittable to the nozzle 5 having the engaging claw 5c but no projection 5d. That is,

$$L1 + L2 + L3 < LN1$$

Therefore, for example, L1 + L2 + L3 is preferably less than 20.6 mm.

When the total of L1 (mm), L2 (mm) and L3 (mm) is at least LN1 (mm), and the total of L2 (mm) and L3 (mm) is at least LN2 (mm), the hydrogen filling receptacle 15 is fittable to the nozzle 5 having the projection 5d and the engaging claw 5c as shown in Fig. 5. That is,

$$L1 + L2 + L3 \geq LN1$$

$$L2 + L3 \geq LN2$$

Therefore, for example, preferably, L1 + L2 + L3 is at least 20.6 mm, and L2 + L3 is at least 9.7 mm.

When the total of L1 (mm), L2 (mm) and L3 (mm) is less than LN1 (mm), and the total of L2 (mm) and L3 (mm) is less than LN2 (mm), the hydrogen filling receptacle 15 is unfittable to the nozzle 5 having the projection 5d and the engaging claw 5c. That is,

$$L1 + L2 + L3 < LN1$$

$$L2 + L3 < LN2$$

Therefore, for example, preferably, L1 + L2 + L3 is less than 20.6 mm, and L2 + L3 is less than 9.7 mm.

Here, one example when it is better to prevent the nozzle 5 and the hydrogen filling receptacle 15 from being combined (to make them unfittable) is that the nozzle 5 of a wider range of the target pressure or flow than the hydrogen filling receptacle 15 is combined with this hydrogen filling receptacle 15 because, in such a case, efficiency of hydrogen filling may decrease.

Reference Signs List

1 hydrogen filling apparatus
2 accumulator
3 compressor
4 hydrogen supply pipe
5 nozzle
10 fuel cell electric vehicle
11 hydrogen tank
12 hydrogen introducing pipe
15 hydrogen filling receptacle
16 back end part
17 step part
18 depression part
19 front end part

**Claims**

1. A hydrogen filling receptacle to which a nozzle is connected in hydrogen filling, the hydrogen filling receptacle comprising:

   a passage for hydrogen, the passage being formed inside the hydrogen filling receptacle, the passage having a diameter D5 (mm);
   a depression part on part of an outer periphery of the hydrogen filling receptacle, the depression part having a diameter of D3 (mm); and
   a step part between a back end and the depression part, the step part having an outer diameter D2 (mm) smaller than D1 (mm) and larger than the D3 (mm) when a side of the hydrogen filling receptacle where the nozzle is to be inserted is defined as a front end, an opposite side thereof is defined as the back end, and an outer diameter of the back end is defined as the D1 (mm), wherein
   the D1 (mm) is larger than D4 (mm) when an outer diameter of the front end is defined as the D4 (mm), and
   the diameter D5 (mm) is at least 3.7 mm.

2. The hydrogen filling receptacle according to claim 1, wherein the diameter D5 (mm) of the passage is at least 1/7 of the diameter D2 (mm) of the step part.

Fig. 1

Fig. 2

Fig. 3

Fig. 4

Fig. 5

Fig. 6

Europäisches
Patentamt

European
Patent Office

Office européen
des brevets

# EUROPEAN SEARCH REPORT

Application Number

EP 22 18 3119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2013 164142 A (TOYOTA MOTOR CORP) 22 August 2013 (2013-08-22) * figure 4 * | 1,2 | INV. F17C5/00 F17C5/06 F17C13/00 |
| X | WO 2013/115120 A1 (HONDA MOTOR CO LTD [JP]) 8 August 2013 (2013-08-08) * figures 1,7 * | 1,2 | |
| X | JP 2009 156324 A (TOYOTA MOTOR CORP) 16 July 2009 (2009-07-16) * figure 1 * | 1,2 | |
| X | DE 10 2017 206955 B4 (VOLKSWAGEN AG [DE]) 25 April 2019 (2019-04-25) * figures 1-4 * | 1,2 | |
| X | US 2014/170530 A1 (KAWAURA TAKASHI [JP] ET AL) 19 June 2014 (2014-06-19) * figure 3 * | 1,2 | |
| X | DE 43 40 783 B4 (WEH VERBINDUNGSTECHNIK [DE]) 3 March 2005 (2005-03-03) * figure 1 * | 1,2 | TECHNICAL FIELDS SEARCHED (IPC) F17C |
| X | EP 1 319 884 B1 (OPEL ADAM AG [DE]) 28 December 2005 (2005-12-28) * figure 1 * | 1,2 | |
| X | JP 2011 156896 A (TOYOTA MOTOR CORP; DAIHATSU MOTOR CO LTD) 18 August 2011 (2011-08-18) * figure 3 * | 1,2 | |

The present search report has been drawn up for all claims

| Place of search | Date of completion of the search | Examiner |
|---|---|---|
| Munich | 6 December 2022 | Papagiannis, Michail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 3119

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2022

| Patent document cited in search report | | Publication date | Patent family member(s) | | Publication date |
|---|---|---|---|---|---|
| JP 2013164142 | A | 22-08-2013 | NONE | | |
| WO 2013115120 | A1 | 08-08-2013 | CN | 104081102 A | 01-10-2014 |
| | | | DE | 112013000801 T5 | 09-10-2014 |
| | | | JP | 5805220 B2 | 04-11-2015 |
| | | | JP | WO2013115120 A1 | 11-05-2015 |
| | | | US | 2014374417 A1 | 25-12-2014 |
| | | | WO | 2013115120 A1 | 08-08-2013 |
| JP 2009156324 | A | 16-07-2009 | NONE | | |
| DE 102017206955 | B4 | 25-04-2019 | NONE | | |
| US 2014170530 | A1 | 19-06-2014 | JP | 5698210 B2 | 08-04-2015 |
| | | | JP | 2014119104 A | 30-06-2014 |
| | | | US | 2014170530 A1 | 19-06-2014 |
| DE 4340783 | B4 | 03-03-2005 | DE | 4340783 A1 | 09-06-1994 |
| | | | DE | 9315780 U1 | 23-12-1993 |
| EP 1319884 | B1 | 28-12-2005 | EP | 1319884 A2 | 18-06-2003 |
| | | | ES | 2254585 T3 | 16-06-2006 |
| JP 2011156896 | A | 18-08-2011 | JP | 2011156896 A | 18-08-2011 |
| | | | WO | 2011092561 A1 | 04-08-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014181777 A
- JP 2009156324 A